# EUROPÄISCHE PATENTSCHRIFT

(11) **EP 2 088 339 B1**
(45) Veröffentlichungstag und Bekanntmachung des Hinweises auf die Patenterteilung: **14.03.2012**
(21) Anmeldenummer: 09001152.9
(22) Anmeldetag: 28.01.2009
(51) Int. Cl.: F16C 11/06

(54) **Kugelgelenksvorrichtung**
Ball joint device
Dispositif de joint à rotule

(30) Priorität: 29.01.2008 DE 202008001325 U
(43) Veröffentlichungstag der Anmeldung: 12.08.2009
(73) Patentinhaber: Edscha Engineering GmbH, 42855 Remscheid (DE)
(72) Erfinder: Mrowka, Peter, 42855 Remscheid (DE); Theisen, Ralf, 42857 Remscheid (DE)
(74) Vertreter: Sparing, Rolf Klaus

(56) Entgegenhaltungen:
- DE-U1- 29 601 261
- DE-U1-202006 006 792

## Beschreibung

Die Erfindung betrifft eine Kugelgelenkvorrichtung nach dem Oberbegriff des Anspruchs 1.

Aus dem Kraftfahrzeugbau ist es bekannt, bewegbar an der Fahrzeugkarosserie angeordnete Klappen, beispielsweise Heckklappen oder Motorhauben, mit Antriebselementen zu verbinden, um Schwenkbewegungen der Klappe zu unterstützen oder eine Öffnungs- oder Schließbewegung der Klappe vollständig ohne Eingriff einer Bedienperson zu ermöglichen. Insbesondere bei Fahrzeugklappen, die mittels eines Eingelenks oder eines Viergelenks mit der Fahrzeugkarosserie verbunden sind, ist es üblich, in ihrer Länge veränderbare Antriebselemente wie beispielsweise Gasdruckfedern oder Spindelantriebe zu verwenden, die an ihren Enden gelenkig mit der Fahrzeugkarosserie und der Klappe verbunden werden. Zur gelenkigen Anbindung des Antriebselements an der Fahrzeugkarosserie und der Klappe sind aus der Praxis Kugelgelenkvorrichtungen bekannt, die einen Kugelbolzen mit einem Kugelkopf und einem Bolzenschaft sowie eine Kugelaufnahme mit einem Aufnahmebereich für den Kopf des Kugelbolzens umfassen. Der Aufnahmebereich weist üblicherweise eine an den Durchmesser des Kugelkopfes angepasste, kalottenförmige Vertiefung auf, an der sich der Kugelkopf abstützt und die ein Lager des Kugelkopfes bei einer Schwenkbewegung des Kugelbolzens bildet. Bei einer bekannten Art von Kugelgelenkvorrichtung geht der kalottenförmige Bereich der Kugelaufnahme in eine zylinderförmige Öffnung über, durch welche der Kugelkopf in den Aufnahmebereich eingebracht werden kann. Zur Sicherung des Kugelkopfes gegen ein unbeabsichtigtes Verlassen des Aufnahmebereichs sind weiterhin Sicherungselemente vorgesehen, welche als Federelemente ausgebildet sind und den Kugelkopf in Richtung der karlottenförmigen Vertiefung vorspannen. Ein Nachteil solcher bekannter Kugelgelenkvorrichtungen ist, dass die Sicherungselemente erst nach Einsetzen des Kugelkopfes in den Aufnahmebereich angeordnet werden können und häufig ein kompliziertes Einbauverfahren notwendig machen. Ein weiterer Nachteil ist, dass die Kugelaufnahme auf den Kugelbolzen einwirkende Drehmomente nicht ausreichend abstützen kann, so dass bei Einwirken hoher Drehmomente auf den Kugelbolzen die Kugelgelenkvorrichtung insgesamt stark belastet wird und sogar zerstört werden kann. Insbesondere, wenn es sich bei dem Antriebselement um einen Spindelantrieb handelt, bilden die zur Befestigung des Antriebselements verwendeten Kugelgelenkvorrichtungen häufig auch eine Verdrehsicherung zwischen Spindelmutter und Spindel des Antriebselements aus. In diesem Fall werden in den Kugelbolzen neben einer gewünschten Verschwenkung auf Grund der Klappenbewegung auch ungewünschte Drehmomente eingeleitet, die von der Kugelgelenkvorrichtung insgesamt aufgenommen werden, was zu einer weiteren Belastung der Kugelgelenkvorrichtung führt.

DE 83 15 429 U1 beschreibt eine Kugelgelenkvorrichtung für eine Gasdruckfeder. Die Kugelgelenkvorrichtung umfasst einen Kugelbolzen mit einem Kugelkopf und einem Bolzenschaft sowie eine Kugelaufnahme mit einem Aufnahmebereich für den Kugelkopf, der in einem oberen Abschnitt des Aufnahmebereichs als kalottenförmigies Lager für den Kugelkopf ausgebildet ist und in einem unteren Abschnitt in eine hohlzylinderförmige Öffnung übergeht. Der Kugelkopf des Kugelbolzens kann durch die Öffnung hindurch in den Aufnahmebereich eingesetzt werden und liegt dann an der kalottenförmigen Lagerfläche an. Die Aufnahmebereich erstreckt sich insgesamt in Richtung des Bolzenschaftes nur soweit, dass der Kugelkopf, jedoch nicht der Bolzenschaft umgriffen wird. Der in die Kugelaufnahme eingesetzte Kugelbolzen ist über einen relativ groß bemessenen, kegelförmigen Bereich verschwenkbar, wobei eine Schwenkbewegung des Kugelbolzens durch ein Anstoßen des Bolzenschaftes an die Kugelaufnahme begrenzt wird. Hierbei werden nachteilig durch die nur kurze Erstreckung der Kugelaufnahme in Richtung des Kugelbolzens hohe Hebelkräften auf die Kugelaufnahme übertragen, was leicht zu einer Beschädigung der Kugelaufnahme führen kann. Um den Sitz des Kugelkopfes in der Kugelaufnahme gegen ein unbeabsichtigtes Lösen zu sichern, werden drei unterschiedliche, alternativ zueinander verwendbare Sicherungselemente beschrieben. Ein erstes Sicherungselement umfasst einen U-förmig gebogenen Draht, der einen ersten, verlängerten Schenkel und einen zweiten, kürzeren Schenkel aufweist. In der Kugelaufnahme ist tangential zu der zylinderförmigen Öffnung des Aufnahmebereichs eine schlitzförmige Ausnehmung vorgesehen, die in einem spitzen Winkel zu der Öffnung hin verläuft. Das U-förmig gebogene Sicherungselement kann derart in die schlitzförmige Ausnehmung eingesetzt werden, dass der erste, längere Schenkel des Sicherungselements in dem Aufnahmebereich unterhalb des eingesetzten Kugelkopfs an diesem anliegt. Der zweite, kürzere Schenkel liegt in einem oberen Bereich der schlitzförmigen Ausnehmung an. In dieser Stellung wird der Kugelkopf durch den unteren Schenkel des Sicherungselements gegen ein Verlassen des Aufnahmebereichs gesichert. Um den Kugelkopf aus dem Aufnahmebereich zu entfernen, kann der untere Schenkel des Sicherungselements von außen mittels des verlängerten Endes des ersten Schenkels in die schlitzförmige Ausnehmung hineingedrückt werden um die Öffnung des Aufnahmebereichs für den Kugelkopf freizugeben. Um das Sicherungselement gegen ein Herausfallen aus der schlitzförmigen Ausnehmung zu sichern, sind die beiden Schenkel des Sicherungselements quer zu der schmalen Erstreckung der schlitzförmigen Ausnehmung gebogen ausgebildet, so dass sie durch entstehende Federkraft gehalten werden. Dies birgt den Nachteil, dass das Sicherungselement relativ leicht aus der schlitzförmigen Ausnehmung gelöst werden kann, insbesondere wenn der Kugelbolzen nicht in die Kugelaufnahme eingesetzt ist. Ein zweites beschriebenes, alternativ zu dem ersten Sicherungselement verwendbares Sicherungselement umfasst einen Sprengring, der in eine ringförmige Nut nahe der Öffnung des Aufnahmebereichs eingesetzt werden kann. Der Sprengring umfasst dabei den in die Kugelaufnahme eingesetzten Kugelkopf unterhalb des Äquators des Kugelkopfes und sichert so den Kugelkopf gegen ein Verlassen des Aufnahmebereichs. Um ein unbeabsichtigtes Aufbiegen des Sprengrings zu vermeiden, ist ein zusätzliches Sicherungsteil vorgesehen, das von außen in die Kugelaufnahme eingeschoben wird und zwei aus einen Draht gebildete Schenkel umfasst, die den Sprengring tangential umfassen und gegen ein Aufbiegen sichern. Nachteilig ist hier, dass das Sicherungselement aus zwei getrennten Teilen besteht, von denen das äußere Sicherungsteil erst nach Einsetzen des Kugelkopfes in die Kugelaufnahme befestigt werden kann, was zu einem aufwändigen Befestigungsverfahren führt. Ein drittes, alternativ zu den ersten beiden Sicherungselementen verwendbares Sicherungselement umfasst eine metallische Blattfeder, die die Kugelaufnahme an einer dem Aufnahmebereich abgewandten Seite umgreift und durch zwei schlitzförmige, seitlich angeordnete Aufnahmen in den Aufnahmebereich eingreift. Die Enden der Blattfeder liegen dabei an der dem Bolzenschaft zugewandten Unterseite des Kugelkopfes an und sichern den Kugelbolzen gegen ein unbeabsichtiges lösen. Nachteilig ist hierbei, dass die relativ dünnen Enden der Blattfeder durch auf den Kugelkopf einwirkende Kräfte leicht verformt werden können. Eine dauerhafte Sicherung des Kugelkopfes gegen ein unbeabsichtigtes Lösen ist daher nicht gewährleistet.

DE 100 41 265 A1 beschreibt eine Kugelgelenkvorrichtung mit einem Kugelbolzen und einer Kugelaufnahme, die einen Aufnahmebereich mit einem oberen, kalottenförmigen Abschnitt und einer unteren, hohlzylinderförmigen Öffnung aufweist. Zur Sicherung des Kugelkopfes in dem Aufnahmebereich sind tangential zu der unteren Öffnung zwei parallel zu einander verlaufende Kanäle vorgesehen, die mit einer elastischen Kunststoffmasse gefüllt werden und bei eingesetztem Kugelkopf an dessen Unterseite anliegen. Nachteilig an dieser Vorrichtung ist, dass die elastische Kunststoffmasse sowohl bei einem Einbringen als auch bei einem Lösen des Kugelbolzens aus der Kugelaufnahme überwunden werden muss. Daher kann entweder der Kugelkopf nur unter Aufwendung sehr großer Kräfte in die Aufnahme eingebracht werden, oder er ist (bei entsprechend kleineren notwendigen Kräften) nur unzureichend gegen ein Lösen gesichert.

DE 20 2006 0006 792 U1 zeigt ein lineares Antriebselement zwischen einem beweglichen Klappenteil und einer Fahrzeugkarosserie, wobei an den Enden des linearen Antriebselements zur Verbindung mit dem beweglichen Klappenteil bzw. der Fahrzeugkarosserie jeweils eine Gelenkvorrichtung, umfassend ein aus einem Blech ausgebildetes Sicherungselement sowie eine Kugelaufnahme, angeordnet ist. Die lineare Antriebseinheit umfasst ferner an ihren Enden einen Kugelkopf, welcher auf einem Bolzenschaft mit einem den Bolzenschaft und einen Aufnahmebereich verbindenden Schulterbereich angeordnet ist und in dem Aufnahmebereich der Kugelaufnahme angeordnet ist. Das Sicherungselement hintergreift den Kugelkopf mittels zweier Stützabschnitte in dem Aufnahmebereich der Kugelaufnahme.

DE 296 01 261 U1 zeigt eine Kugelgelenkvorrichtung, umfassend einen an einem Kugelbolzen angeordneten Kugelkopf, eine den Kugelkopf umgebende Kugelaufnahme sowie ein den Kugelkopf und die Kugelaufnahme verbindendes Sicherungselement aus einem Federdraht. Das Sicherungselement umfasst auf einer oberen Seite der Kugelaufnahme zwei gegen die Kugelaufnahme und auf einen zylinderförmig hervorstehenden Randbereich gespannte Bügelarme, wobei die Bügel jeweils in einem seitlichen Verbindungsabschnitt des Sicherungselements übergehen, welche Verbindungsabschnitte in einer seitlichen Führungsaufnahme der Kugelaufnahme fest gehalten sind. Um eine Gegenspannung zu erzeugen und damit ein vertikales Verrutschen des Sicherungselements zu verhindern, sind sich in horizontaler Richtung, d.h. in einer Richtung einem der Führungsaufnahme gegenüberliegenden Spalt der Kugelaufnahme, erstreckende Stützabschnitte des Sicherungselements an den Verbindungsabschnitten angeordnet. Die Stützabschnitte weisen eine Verlängerung auf, die in den Spalt ragen.

Es ist die Aufgabe der Erfindung, eine Kugelgelenkvorrichtung nach dem Oberbegriff des Anspruchs 1 zu schaffen, die eine vereinfachte und sichere gelenkige Verbindung des Kugelbolzens mit der Kugelaufnahme ermöglicht und die eine hohe Stabilität gegenüber eingeleiteten Drehmomenten aufweist. Diese Aufgabe wird erfindungsgemäß bei der eingangs genannten Kugelgelenkvorrichtung mit den kennzeichnenden Merkmalen des Anspruchs 1 gelöst.

Vorteilhaft wird durch das Vorsehen eines aus Draht gebildeten Sicherungselements, das zwei in dem Aufnahmebereich anordenbare Stützabschnitte aufweist und das wenigstens zwei Abschnitte aufweist, die an der abgewandten Außenseite der Kugelaufnahme anordenbar sind, eine Kugelgelenkvorrichtung geschaffen, die eine sichere Abstützung des Kugelkopfes in dem Aufnahmebereich gewährleistet. Durch das Vorsehen zweier in dem Aufnahmebereich anordenbarer Stützabschnitte wird dabei vorteilhaft eine sichere Abstützung des Kugelkopfes in jeder möglichen Schwenkstellung des Kugelbolzens erreicht. Durch das Vorsehen der wenigstens zwei Halteabschnitte, die an der dem Aufnahmebereich abgewandten Außenseite der Kugelaufnahme angeordnet sind, wird vorteilhaft auch bei hohen, auf dem Kugelbolzen einwirkenden Zugkräfte oder Drehmomenten ein Lösen des Kugelkopfes aus dem Aufnahmebereich sicher vermieden. Besonders vorteilhaft ist dabei, dass das Sicherungselement durch die zwei in dem Aufnahmebereich angeordneten Stützabschnitte und die wenigstens zwei der Außenseite angeordneten Halteabschnitte auch dann sicher an der Kugelaufnahme befestigt ist, wenn der Kugelbolzen nicht in der Kugelaufnahme befestigt ist. Dies ermöglicht, dass Kugelbolzen und Kugelaufnahme getrennt voneinander aufbewahrt oder beispielsweise nach der Herstellung getrennt ausgeliefert werden können, ohne dass das Sicherungselement gesondert aufbewahrt werden müsste. Weiter wird ein aufwendiges Verfahren zum Verbinden von Kugelkopf und Kugelaufnahme vermieden, da das Sicherungselement bereits vor dem Verbringen des Kugelkopfes in die Kugelaufnahme an der Kugelaufnahme festgelegt sein kann und der Kugelkopf lediglich noch in den Aufnahmebereich eingesteckt werden muss.

Vorzugsweise weist die Kugelaufnahme einen den Schulterbereich des Kugelbolzens umgreifenden Abstützbereich auf, der zur Aufnahme eines in den Kugelbolzens eingeleiteten Drehmoments ausgebildet ist. Hierdurch können auf den Kugelbolzen einwirkende Drehmomente, wie sie beispielsweise bei der Verwendung der Kugelgelenkvorrichtung zur Anlenkung eines Spindelantriebs auftreten können, sicher von der Kugelgelenkvorrichtung aufgenommen werden. Vorteilhaft werden dabei durch die relativ große axiale Erstreckung des Abstützbereichs um den Kugelbolzen herum nur relativ kleine Hebelkräfte auf die Kugelaufnahme einwirken. Dies ermöglicht eine sichere Abstützung des Antriebselements auch dann, wenn relativ große Lasten bewegt werden müssen und es zu entsprechend großen Belastungen der Kugelgelenkvorrichtung kommt. Weiter ergibt sich durch das Vorsehen des Abstützbereichs ein verbessertes Überlastverhalten, beispielswesie wenn auf eine von der Antriebsvorrichtung angetriebene Heckklappe durch äußere Störungen ein außergewöhnlich großes Drehmoment einwirkt.

Vorzugsweise umfasst der Abstützbereich zwei parallel zu einander angeordnete Abstützflächen. Besonders bevorzugt ist dabei der Schulterbereich des Kugelbolzens so ausgebildet, dass er wenigstens einen dem Abstand der Abstützflächen zugeordneten Durchmesser aufweist. Hierdurch kann eine Verschwenkbarkeit des Kugelbolzens in der Kugelaufnahme vorteilhaft durch eine Wechselwirkung des Schulterbereichs mit den Abstützflächen auf eine Bewegung in einer Schwenkebene eingeschränkt werden. Hierdurch wird eine Kugelgelenkvorrichtung geschaffen, die ein Verschwenken des Kugelbolzens nur um eine einzelne Schwenkachse ermöglicht. Dies ist insbesondere für die Verwendung bei Kraftfahrzeugantriebselementen vorteilhaft, da hier im Allgemeinen eine Schwenkbewegung des Antriebselements gegenüber der Karosserie oder der angetriebenen Klappe nur um eine einzige Schwenkachse gewünscht ist. Die so geschaffene Gelenkverbindung weist dabei den Vorteil auf, durch ein einfaches Einstecken des Kugelkopfes in die Kugelaufnahme sehr einfach verbindbar zu sein und ermöglicht es weiter, dass unzulässige Drehbewegungen des Sicherungselements sicher durch die Kugelgelenkvorrichtung aufgenommen und abgefangen werden können.

Vorzugsweise weist der Schulterbereich des Kugelbolzens wenigstens einen Durchmesser auf, der gleichgroß oder größer ist als andere Durchmesser des Kugelbolzens. Hierdurch wird eine einfache Verbindung des Kugelkopfes mit der Kugelaufnahme weiter sichergestellt, da eine relativ große Öffnung des Aufnahmebereiches zur Verfügung gestellt werden kann.

Vorzugsweise sind der Schulterbereich des Kugelbolzens und der Kugelkopf rotationssymmetrisch bezüglich einer gemeinsamen Rotationsachse ausgebildet. Dies bietet den Vorteil, dass der Kugelbolzen unabhängig von einer vorgegebenen Schwenkebene an dem Antriebselement oder der Klappe bzw. Karosserie angeordnet werden kann. Ein Festlegen der Schwenkebene erfolgt dann vorteilhaft durch die Anordnung der Kugelaufnahme an dem jeweils anderen Teil.

In einer bevorzugten Ausführung weist das Sicherungselement drei Halteabschnitte auf, die an der dem Aufnahmebereich abgewandten Außenseiten der Kugelaufnahme anordenbar sind. Besonders bevorzugt werden dabei zwei Halteabschnitte nahe der Enden des Drahtes ausgebildet. Durch diese bevorzugte Ausgestaltung können in axialer Richtung des Kugelbolzens wirkende Kräfte sicher durch das Sicherungselement aufgenommen werden. Um eine leichte Anordenbarkeit des Sicherungselements an der Kugelaufnahme zu gewährleisten, weist diese vorzugsweise Öffnungen an ihren Seitenflächen auf, in welche das Sicherungselement eingeführt werden kann. Dies ermöglicht weiter vorteilhaft, dass das Sicherungselement auf einfache Weise von der Kugelaufnahme entfernt werden kann, falls der Kugelkopf aus der Kugelaufnahme gelöst werden soll.

Vorzugsweise sind die in die in der Kugelaufnahme angeordneten Stützabschnitte des Sicherungselements im Wesentlichen parallel zueinander angeordnet. Weiter sind die Stützabschnitte dabei vorzugsweise tangential zu einem Umfang des Kugelbolzens anordenbar. Diese Ausgestaltung führt zu einer besonders sicheren Aufnahme des Kugelkopfes, wenn der Abstand der parallel zueinander angeordneten Stützabschnitte kleiner ist als der Durchmesser des Kugelkopfes. Insbesondere wenn die Stützabschnitte parallel zu einer Abstützfläche des Abstützbereichs ausgerichtet sind, wird hierdurch weiter eine Schwenkbewegung des Kugelbolzens in der bevorzugten Schwenkebene nicht behindert.

Vorzugsweise weist das Sicherungselement ein erstes Ende und ein zweites Ende auf, die sich jeweils quer zu den Stützabschnitten erstrecken. Dies führt weiter zu einem sicheren Sitz des Sicherungselementes auf der Kugel.

Vorzugsweise ist die Kugelaufnahme aus einem faserverstärkten Kunststoff ausgebildet. Der Kugelkopf ist bevorzugt aus einem Metall und insbesondere als Fließpressteil ausgebildet. Durch die Verwendung dieser Werkstoffe wird eine ausreichende Stabilität der Kugelgelenkvorrichtung sichergestellt, wobei gleichzeitig der Kugelkopf und die Kugelaufnahme einen Verschleißfreien Reibkontakt ausbilden. In einer alternativen, ebenfalls bevorzugten Ausgestaltung sind die Kugelaufnahme und/oder der Kugelbolzen als Sinterteile ausgebildet. Auch in dieser Ausgestaltung wird eine hohe Stabilität und günstige Reibpaarung erreicht.

Der Kugelkopf weist vorzugsweise in einem dem Bolzenschaft abgewandten Bereich eine Abflachung zur Aufnahme eines Schmiermittels auf. Durch eine an der Oberseite des Kugelkopfes vorgesehene Abflachung wird die Verwendung eines Schmiermittels besonders vereinfacht, da hierdurch ein von dem Außenbereich im wesentlichen abgeschlossenes Reservoir gebildet wird.

Die Kugelaufnahme weist zweckmäßig eine sich quer zu einer Symmetrieachse des Kugelbolzens erstreckende Befestigungsbohrung auf.

Ein Antriebselement zum Antreiben eines an einem Karosserieteil angeordneten Klappenteils umfasst erfindungsgemäß einen mit dem Klappenteil verbindbaren ersten Gehäuseabschnitt, einen mit dem Karosserieteil verbindbaren zweiten Gehäuseabschnitt, wobei der erste Gehäuseabschnitt und der zweite Gehäuseabschnitt zueinander teleskopierbar sind, wobei wenigstens an einem von ersten Gehäuseabschnitt und zweiten Gehäuseabschnitt ein Element, Kugelbolzen, oder Kugelaufnahme, einer Kugelgelenkvorrichtung der vorbeschriebenen Art angeordnet sind. Das Antriebselement umfasst dabei besonders bevorzugt eine Spindelantriebsvorrichtung, wobei einem der beiden Gehäuseabschnitte eine Spindel und dem anderen der beiden Gehäuseabschnitte eine Spindelmutter zugeordnet sind, wobei eine von Spindel oder Spindelmutter in eine Drehrichtung antreibbar sind. Insbesondere für ein solches Antriebselement bietet die beschriebene Kugelgelenkvorrichtung den Vorteil, dass eine Rotationsbewegung der Gehäuseabschnitte sicher abgestützt werden kann. Somit wird einerseits eine Verdrehsicherung der Spindel bzw. Spindelmutter geschaffen, andererseits kann das Antriebselement sicher auf der vorgesehenen Schwenkbahn geführt werden.

Weitere Vorteile und Merkmale der Erfindung ergeben sich aus der nachfolgenden Beschreibung eines bevorzugten Ausführungsbeispiels sowie aus den abhängigen Ansprüchen.

Nachstehend wird ein bevorzugtes Ausführungsbeispiel einer erfindungsgemäßen Kugelgelenkvorrichtung unter Bezugnahme auf die anliegenden Zeichnungen beispielhaft erläutert.
- Fig. 1: zeigt getrennt voneinander perspektivische Ansichten des Sicherungselements, der Kugelaufnahme und des Kugelbolzens eines ersten Ausführungsbeispiels einer erfindungsgemäßen Kugelgelenkvorrichtung.
- Fig. 2: zeigt eine perspektivische Ansicht der miteinander verbundenen Kugelaufnahme und des Sicherungselements.
- Fig. 3: zeigt eine Seitenansicht des Kugelbolzens.
- Fig. 4: zeigt eine Querschnittsansicht der Kugelaufnahme mit eingesetztem Kugelbolzen in Blickrichtung der x-Achse gemäß Fig.1.
- Fig. 5: zeigt eine Querschnittsansicht gemäß Fig. 4, wobei eine Lösebewegung des Sicherungselements angedeutet ist.
- Fig. 6: zeigt eine Seitenansicht der Kugelaufnahme mit eingesetztem Kugelbolzen in Richtung der y-Achse gemäß Fig. 1.
- Fig. 7: zeigt eine Seitenansicht gemäß Fig. 6 mit verschwenktem Kugelbolzen.

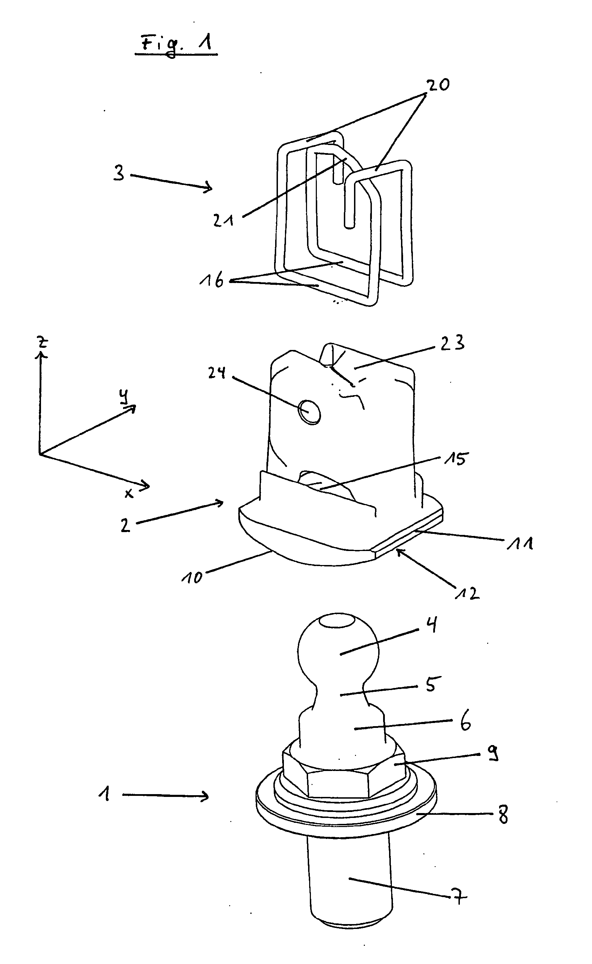

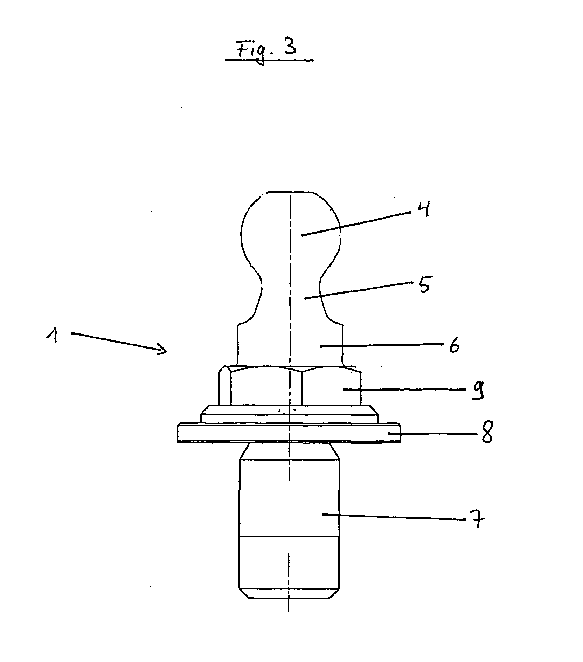

Ein erstes Ausführungsbeispiel einer erfindungsgemäßen Kugelgelenkvorrichtung umfasst einen Kugelbolzen 1, eine Kugelaufnahme 2, und ein Sicherungselement 3. Wie insbesondere in Fig. 1 und Fig. 3 gut zu erkennen ist, umfasst der Kugelbolzen 1 einen Kugelkopf 4, der an seiner unteren, dem Bolzenschaft 7 zugewandten Seite in einen Halsbereich 5 übergeht. Die Seitenfläche des Halsbereichs 5 ist dabei konkav gewölbt und weist einen Querschnittsdurchmesser auf, der geringer ist als der Querschnittsdurchmesser des Kugelkopfs 4. An den Halsbereich 5 schließt sich ein Schulterbereich 6 an, der zylindrisch geformt ist und gerade Seitenflächen aufweist. Der Querschnittsdurchmesser des Schulterbereichs 6 entspricht dabei dem Querschnittsdurchmesser des Kugelkopfs 4 oder übersteigt diesen leicht. An den Schulterbereich 6 schließt sich der Bolzenschaft 7 an, der in seinem unteren, dem Kugelkopf 4 abgewandten Bereich ein nicht dargestelltes Gewinde zur Befestigung des Kugelbolzens 1 an einem Karosserieteil, Klappenteil oder Antriebselement, aufweist. Der Bolzenschaft 7 weist in einem Bereich nahe des Schulterbereichs 6 eine scheibenförmige Auskragung 8 auf, die zur Anlage des Kugelbolzens an einer Befestigungsfläche dient. Weiter weist der Bolzenschaft 7 eine Werkzeugaufnahme 9 auf, die vorliegend sechseckig ausgebildet ist und die zur Aufnahme eines Werkzeugs bei einem Verschrauben des Kugelbolzens 1 dient. Es versteht sich, dass es alternativ vorgesehen sein kann, den Kugelbolzen anderweitig zu befestigen. Beispielsweise kann der untere, dem Kugelkopf 4 abgewandte Bereich des Bolzenschafts für eine Vernietung oder Verklebung ausgebildet sein.

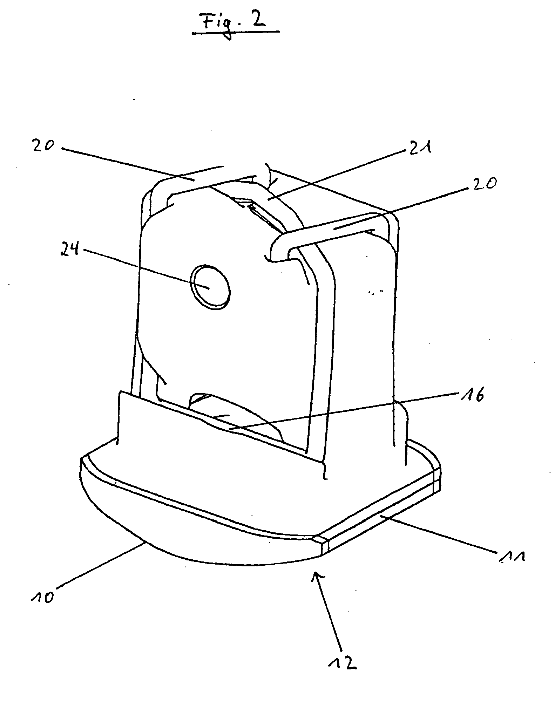

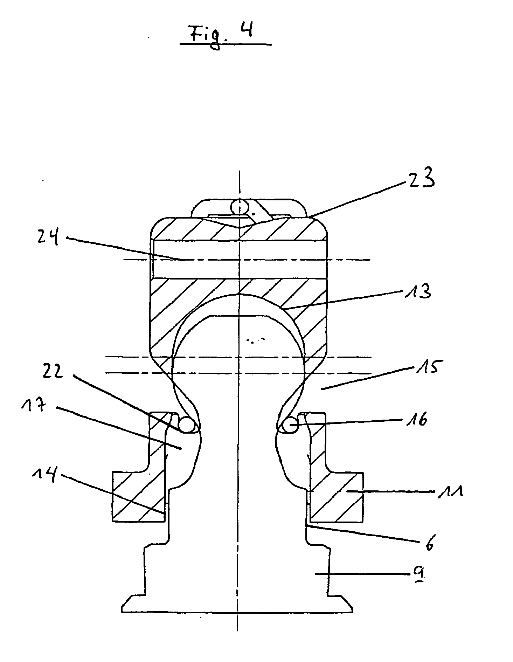

Wie insbesondere in Fig. 2 und Fig. 4 gut zu erkennen ist, weist die Kugelaufnahme 2 eine im wesentlichen quaderförmige Außenfläche auf, an deren Unterseite 10 eine umlaufende Auswölbung 11 vorgesehen ist. Die Auswölbung 11 umrahmt eine in der Unterseite der Kugelaufnahme 2 vorgesehene Öffnung 12, durch die der Kugelbolzen 1 in den innerhalb der Kugelaufnahme 2 liegenden Aufnahmebereich 17 eingeführt werden kann. Die Öffnung 2 weist in einem Schnitt parallel der x-y-Ebene eine im wesentlichen rechteckige Form auf. Die Richtung der x- und y-Achsen kann dabei dem in Fig. 1 dargestellten kartesischen Koordinatensystem entnommen werden, auf das auch im Folgenden Bezug genommen wird.

Im Inneren der Kugelaufnahme 2 ist am oberen Ende des Aufnahmebereichs 17 eine kalottenförmige Aufnahmefläche 13 angeordnet, die nach unten hin in im Wesentlichen gerade verlaufende Seitenflächen des Aufnahmebereichs 17 übergeht. Die Kugelaufnahme 2 weist in ihren parallel zu der x-z-Ebene liegenden Seitenflächen seitliche Ausnehmungen 15 auf, durch die Stützabschnitte 16 des Sicherungselements 3 in den Aufnahmebereich eingeführt werden können. In einem Bereich nahe der Öffnung 12 weist der Aufnahmebereich 17 im wesentlichen parallel zu der x-z-Ebene liegende Abstützflächen 18 auf. Bei eingesetztem Kugelbolzen 1 wirken die Abstützflächen 18 dabei mit dem Schulterbereich 6 des Kugelbolzens 1 zusammen, um eine Schwenkbewegung des Kugelbolzens 1 in der y-z-Ebene zu unterdrücken. Der Aufnahmebereich 17 der Kugelaufnahme 2 ist weiter so bemessen, dass bei vollständig in z-Richtung eingeschobenem Kugelbolzen 1 die Unterseite der Auswölbung 11 zu der Werkzeugaufnahme 9 des Kugelbolzens 1 benachbart ist und der Schulterbereich 6 in seiner axialen Erstreckung nahezu vollständig umschlossen wird.

Oberhalb des Aufnahmebereichs 17 ist in der Kugelaufnahme 2 eine im wesentlichen in y-Richtung verlaufende Befestigungsbohrung 24 vorgesehen. Diese dient zur Aufnahme eines nicht dargestellten Befestigungsstiftes zur Verbindung der Kugelaufnahme 2 mit einem ebenfalls nicht dargestellten weiteren Befestigungselement. Alternativ hierzu ist vorgesehen, dass die Kugelaufnahme 2 selbst Befestigungselemente (nicht dargestellt) aufweist.

Wie in Fig. 1 gut zu erkennen ist, weist das aus einem Draht gebildete Sicherungselement 3 zwei parallel zueinander in x-Richtung verlaufende Stützabschnitte 16 auf. Weiter umfasst das Sicherungselement 3 zwei an den Enden des Drahtes ausgebildete Halteabschnitte 20 auf, die hakenförmig gebogen sind und im Wesentlichen innerhalb der y-z-Ebene verlaufen. Weiter weist das Sicherungselement 3 einen von dem mittleren Bereich des Drahtes gebildeten dritten Halteabschnitts 21 auf.

Die Erfindung funktioniert nun wie folgt:

Zur Ausbildung der Kugelgelenkvorrichtung wird zunächst das Sicherungselement 3 wie in Fig. 2 dargestellt auf die Kugelaufnahme 2 aufgesetzt. Dabei werden die Stützabschnitte 16 des Sicherungselement 3 durch die seitlichen Ausnehmungen 15 in den Aufnahmebereich 17 der Kugelaufnahme 2 eingeführt. Wie insbesondere in Fig. 4 gut zu erkennen ist, weist die Kugelaufnahme 2 jeweils für die Enden der Stützabschnitte 16 Haltenuten 22 auf, in denen die Stützabschnitte 16 abgelegt werden können. Wie weiter in Fig. 2 gut zu erkennen ist, liegen die Halteabschnitte 20, 21 auf der dem Aufnahmebereich 17 abgewandten Außenseite 23 der Kugelaufnahme 2 auf, wobei die Enden des Sicherungselements 3 in die Kugelaufnahme 2 eingesteckt werden.

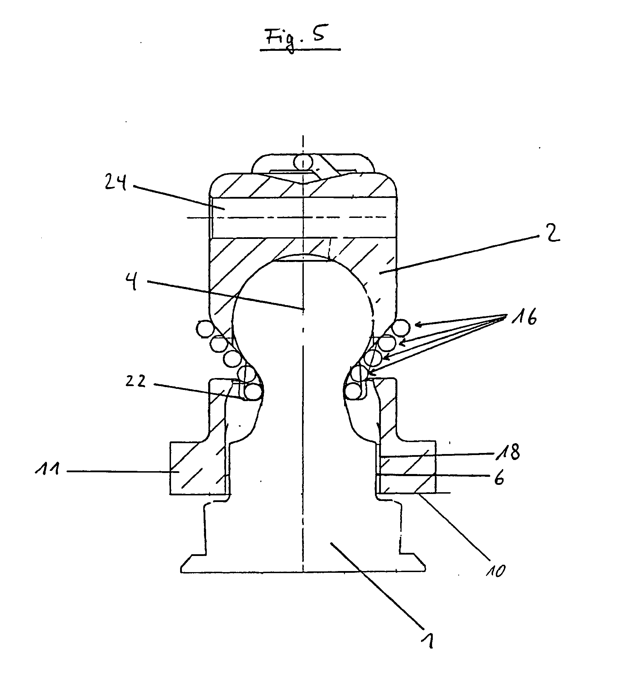

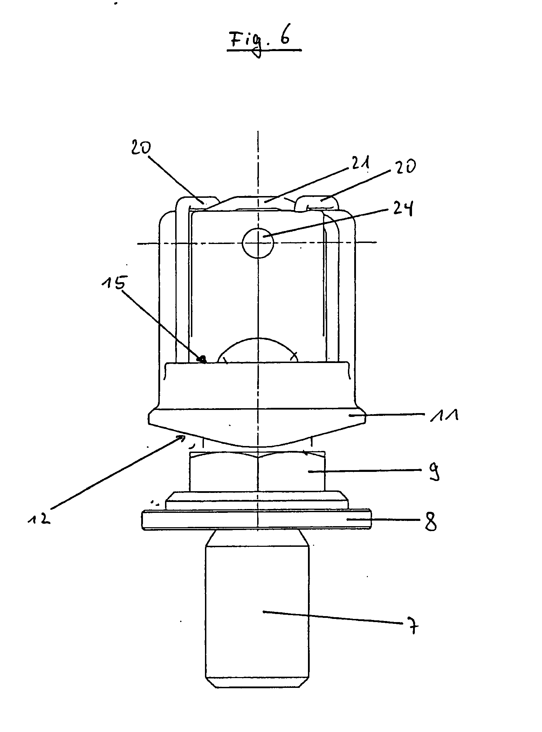

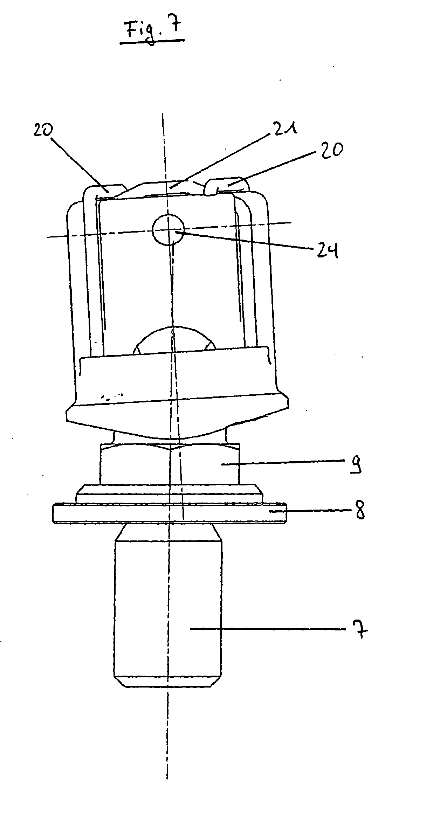

Zur Herstellung der Kugelgelenkvorrichtung wird nun weiter der Kugelbolzen 1 in Richtung der z-Achse in den Aufnahmebereich 17 der Kugelaufnahme 2 eingeschoben. Dabei werden die Stützabschnitte 16 des Sicherungselements 3 wie in Fig. 5 angedeutet durch die Ausnehmungen 15 aus dem Aufnahmebereich 17 verdrängt, so dass der Kugelkopf 4 in Anlage zu der Aufnahmefläche 13 gelangt. Die Stützabschnitte 16 des Sicherungselements 3 gelangen dabei wieder wie in Fig. 5 angedeutet entlang des konkaven Halsbereiches 5 des Kugelbolzens 1 in den Aufnahmebereich 17 zurück und liegen dann in der Haltenut 22 der Kugelaufnahme 2 auf. In dieser Position ist der Kugelkopf 4 gegen eine Bewegung entgegen der z-Achse gesichert, da bei einer solchen Bewegung wie in Fig. 4 erkennbar die Stützabschnitte 16 des Sicherungselementes 3 in der Haltenut 22 aufliegen und eine Verlagerung des Kugelkopfes 4 verhindern. Wie weiter in Fig. 4 zu erkennen ist, ist der Kugelbolzen 1 in dieser Position durch eine Wechselwirkung des Schulterbereichs 6 mit den Abstützflächen 18 an einer Schwenkbewegung in der y-z-Ebene gehindert. Wie in Fig. 6 und Fig. 7 gut zu erkennen ist, ist jedoch eine Schwenkbewegung des Kugelbolzens 1 in der x-z-Ebene weiterhin möglich.

Um den Kugelbolzen 1 aus der Kugelaufnahme 2 zu lösen, sind die folgenden Schritte auszuführen: zuerst wird der Kugelbolzen 1 wie in Fig. 5 dargestellt in Richtung der z-Achse verlagert, so dass der Kugelkopf 4 in Anlage zu der Aufnahmefläche 13 gelangt. Daraufhin kann, beispielsweise mit einem Werkzeug wie einem Schraubendreher, das Sicherungselement 3 in Richtung der z-Achse von der Kugelaufnahme 2 abgezogen werden. Die Stützabschnitte 16 werden dabei wie in Fig. 5 angedeutet entlang des Halsbereichs 5 des Kugelbolzens 1 durch die Ausnehmungen 15 aus dem Aufnahmebereich 17 entfernt. Der Kugelbolzen 1 kann nun leicht in einer Richtung entgegen der z-Achse aus der Kugelaufnahme 2 entfernt werden.

Für die Verwendung der erfindungsgemäßen Kugelgelenkvorrichtung zur Anlenkung eines Antriebssystem an einer schwenkbar mit einem Kraftfahrzeug verbundenen Klappe werden an dem Antriebselement wenigstens eine, vorzugsweise jedoch zwei Kugelaufnahmen angeordnet. Die zugehörigen Kugelbolzen 1 werden dann jeweils durch Verschraubung beispielsweise an der Fahrzeugkarosserie und der zu bewegenden Klappe befestigt. Es versteht sich, dass auch die Kugelbolzen 1 an dem Antriebselement befestigt werden können, während die Kugelaufnahmen 2 an der Fahrzeugkarosserie und der Fahrzeugklappe vorgesehen werden. Zur Befestigung des Antriebselements an der Fahrzeugkarosserie und der Fahrzeugklappe wird nun lediglich der Kugelbolzen 1 in die Kugelaufnahme 2 eingedrückt, wodurch der Kugelkopf 4 durch die Sicherungselemente 3 gesichert wird. Die Anordnung der Kugelaufnahme 2 erfolgt dabei zweckmäßig derart, dass durch die Wechselwirkung des Schulterbereichs 6 mit den Abstützflächen 18 eine Schwenkbewegung des Antriebselements auf eine bevorzugte Schwenkachse festgelegt wird. Schwenkbewegungen des Antriebselements in Richtungen außerhalb dieser Schwenkebene werden dann von den Abstützflächen der Kugelaufnahme aufgenommen, ohne dass es zu einer Übertragung unzulässig hoher Hebelkräfte auf die Kugelaufnahme 2 oder den Kugelbolzen 1 kommt. Insbesondere, wenn es sich bei dem Antriebselement um einen Spindelantrieb handelt, kann die Kugelgelenkvorrichtung einen Verdrehschutz der Gehäuseabschnitte des Antriebselements ausbilden, ohne dass ein gesonderter Verdrehschutz zwischen Spindel und Spindelmutter vorzusehen ist.

Vorliegend wurde die Erfindung anhand eines bevorzugten Ausführungsbeispiels erläutert, wobei zur Verdeutlichung Bezug auf ein kartesisches Achsensystem genommen wurde. Es versteht sich, dass die beschriebenen Elemente nicht notwendigerweise entlang der Achsen eines kartesischen Koordinatensystems ausrichtbar sein müssen. Insbesondere ist es nicht notwendig, dass beschriebene Ebenen oder Achsen jeweils rechtwinklig zueinander ausgerichtet sind oder geradlinig verlaufen müssen.

## Patentansprüche

1. Kugelgelenkvorrichtung zur gelenkigen Anbindung eines Antriebselements an einem feststehenden oder bewegbaren Klappenteil, umfassend
einen an einem von Antriebselement und Klappenteil anordenbaren Kugelbolzen (1) mit einem Kugelkopf (4) und einem Bolzenschaft (7),
eine an dem anderen von Antriebselement und Klappenteil anordenbare Kugelaufnahme (2) mit einer Aufnahmefläche (13) in einem Aufnahmebereich (17) und einer dem Aufnahmebereich (17) abgewandten Außenseite (23), und
ein aus einem Draht ausgebildetes Sicherungselement (3) zur Sicherung des Kugelkopfes (4) in dem Aufnahmebereich (17),
wobei der Kugelkopf (4) in dem Aufnahmebereich (17) bewegbar anordenbar ist, und
wobei der Kugelbolzen (1) einen den Kugelkopf (4) und den Bolzenschaft (7) verbindenden Schulterbereich (6) aufweist,
**dadurch gekennzeichnet,**
**dass** das Sicherungselement (3) zwei in dem Aufnahmebereich (17) anordenbare Stützabschnitte (16) aufweist,
**dass** das Sicherungselement (3) einen ersten Halteabschnitt (20) und einen zweiten Halteabschnitt (20) aufweist, wobei der erste Halteabschnitt (20) und der zweite Halteabschnitt (20) an der dem Aufnahmebereich abgewandten Außenseite (23) der Kugelaufnahme (2) anordenbar sind, und
**dass** die Stützabschnitte (16) der Aufnahmefläche (13) der Kugelaufnahme (2) gegenüberliegend den Kugelkopf (4) hintergreifen.

2. Kugelgelenkvorrichtung nach Anspruch 1, **dadurch gekennzeichnet, dass** die Kugelaufnahme (2) eine sich parallel zu der Längsachse des Stützabschnitts (16) erstreckende Haltenut (22) aufweist, an der der Stützabschnitt (16) aufliegt.

3. Kugelgelenkvorrichtung nach Anspruch 1 oder 2, **dadurch gekennzeichnet, dass** die Kugelaufnahme (2) einen den Schulterbereich (6) des Kugelbolzens (1) umgreifenden Abstützbereich aufweist, der zur Aufnahme eines in den Kugelbolzen (1) eingeleiteten Drehmoments ausgebildet ist.

4. Kugelgelenkvorrichtung nach Anspruch 3, **dadurch gekennzeichnet, dass** der Abstützbereich zwei parallel zueinander angeordnete Abstützflächen (18) aufweist.

5. Kugelgelenkvorrichtung nach Anspruch 4, **dadurch gekennzeichnet, dass** eine Verschwenkbarkeit des Kugelbolzens (1) in der Kugelaufnahme (2) durch eine Wechselwirkung des Schulterbereichs (6) mit den Abstützflächen (18) auf eine Bewegung in einer Schwenkebene einschränkbar ist.

6. Kugelgelenkvorrichtung nach einem der Ansprüche 1 bis 5, **dadurch gekennzeichnet, dass** der Schulterbereich (6) des Kugelbolzens (1) wenigstens einen Durchmesser aufweist, der gleich groß oder größer ist als der Durchmesser des Kugelkopfes (4).

7. Kugelgelenkvorrichtung nach einem der Ansprüche 1 bis 6, **dadurch gekennzeichnet, dass** der Schulterbereich (6) des Kugelbolzens (1) und der Kugelkopf (4) rotationssymmetrisch bezüglich einer gemeinsamen Rotationsachse ausgebildet sind.

8. Kugelgelenkvorrichtung nach einem der Ansprüche 1 bis 7, **dadurch gekennzeichnet, dass** das Sicherungselement (3) einen dritten Halteabschnitt (21) aufweist, der an der abgewandten Außenseite (23) der Kugelaufnahme (2) anordenbar ist, und dass der dritte Halteabschnitt (21) zwischen dem ersten und dem zweiten Halteabschnitt (20) angeordnet ist.

9. Kugelgelenkvorrichtung nach einem der Ansprüche 1 bis 8, **dadurch gekennzeichnet, dass** Halteabschnitte (20, 21) an den Enden des Drahtes ausgebildet sind.

10. Kugelgelenkvorrichtung nach einem der Ansprüche 1 bis 9, **dadurch gekennzeichnet, dass** Seitenflächen der Kugelaufnahme (2) Ausnehmungen (15) für eine Aufnahme des Sicherungselements aufweisen.

11. Kugelgelenkvorrichtung nach einem der Ansprüche 1 bis 10, **dadurch gekennzeichnet, dass** die Stützabschnitte (16) des Sicherungselements (3) im wesentlichen parallel zueinander angeordnet sind.

12. Kugelgelenkvorrichtung nach einem der Ansprüche 1 bis 11, **dadurch gekennzeichnet, dass** die Stützabschnitte (16) des Sicherungselements (3) tangential zu einem Umfang des Kugelbolzens (1) anordenbar sind.

13. Antriebselement zum Antreiben eines an einem Karosserieteil bewegbar angeordneten Klappenteils, umfasend
einen mit dem Klappenteil verbindbaren ersten Gehäuseabschnitt, und
einen mit dem Karosserieteil verbindbaren zweiten Gehäuseabschnitt,
wobei der erste Gehäuseabschnitt und der zweite Gehäuseabschnitt zueinander teleskopierbar sind,
**dadurch gekennzeichnet,**
**dass** wenigstens an einem von erstem Gehäuseabschnitt und zweitem Gehäuseabschnitt ein Element, Kugelbolzen (1) oder Kugelaufnahme (2), einer Kugelgelenkvorrichtung nach einem der Ansprüche 1 bis 12 angeordnet ist.

14. Antriebselement nach Anspruch 13, weiter umfassend eine Spindelantriebsvorrichtung, wobei einem von erstem und zweitem Gehäuseabschnitt eine Spindel und dem anderen von erstem und zweitem Gehäuseabschnitt eine Spindelmutter zugeordnet ist.

15. Antriebselement nach Anspruch 14, **dadurch gekennzeichnet, dass** ein von einer Drehung von Spindel oder Spindelmutter herrührendes Drehmoment in die Kugelgelenkvorrichtung einleitbar und durch eine Wechselwirkung des Schulterbereichs (6) des Kugelbolzens (1) mit dem Abstützbereich der Kugelaufnahme (2) aufnehmbar ist.

## Claims

1. Spherical joint device for articulated connection of a drive element to a fixed or movable flap portion, comprising
a ball pin (1) which has a spherical head (4) and a pin shaft (7) and which can be arranged on one from the drive element or flap portion,
a spherical receiving member (2) which can be arranged on the other from the drive element or flap portion and which has a receiving face (13) in a receiving region (17) and an outer side (23) which faces away from the receiving region (17), and
a securing element (3) which is constructed from a wire for securing the spherical head (4) in the receiving region (17),
the spherical head (4) being able to be movably arranged in the receiving region (17), and
the ball pin (1) having a shoulder region (6) which connects the spherical head (4) and the pin shaft (7),
**characterised in**
**that** the securing element (3) has two supporting portions (16) which can be arranged in the receiving region (17),
**that** the securing element (3) has a first retention portion (20) and a second retention portion (20), the first retention portion (20) and the second retention portion (20) being able to be arranged at the outer side (23) of the spherical receiving member (2) facing away from the receiving region, and
**that** the support portions (16) engage behind the spherical head (4) opposite the receiving face (13) of the spherical receiving member (2).

2. Spherical joint device according to claim 1, **characterised in that** the spherical receiving member (2) has a retention groove (22) which extends parallel with the longitudinal axis of the support portion (16) and on which the support portion (16) rests.

3. Spherical joint device according to claim 1 or 2, **characterised in that** the spherical receiving member (2) has a support region which engages around the shoulder region (6) of the ball pin (1) and which is constructed so as to receive a torque which is introduced into the ball pin (1).

4. Spherical joint device according to claim 3, **characterised in that** the support region has two support faces (18) which are arranged parallel with each other.

5. Spherical joint device according to claim 4, **characterised in that** a pivotability of the ball pin (1) in the spherical receiving member (2) can be limited to a movement in a pivot plane by means of interaction of the shoulder region (6) with the support faces (18).

6. Spherical joint device according to any one of claims 1 to 5, **characterised in that** the shoulder region (6) of the ball pin (1) has at least a diameter which is of the same size as or greater than the diameter of the spherical head (4).

7. Spherical joint device according to any one of claims 1 to 6, **characterised in that** the shoulder region (6) of the ball pin (1) and the spherical head (4) are constructed so as to be rotationally symmetrical with respect to a common rotation axis.

8. Spherical joint device according to any one of claims 1 to 7, **characterised in that** the securing element (3) has a third retention portion (21) which can be arranged at the remote outer side (23) of the spherical receiving member (2) and that the third retention portion (21) is arranged between the first and the second retention portion (20).

9. Spherical joint device according to any one of claims 1 to 8, **characterised in that** retention portions (20, 21) are constructed at the ends of the wire.

10. Spherical joint device according to any one of claims 1 to 9, **characterised in that** lateral faces of the spherical receiving member (2) have recesses (15) for receiving the securing element.

11. Spherical joint device according to any one of claims 1 to 10, **characterised in that** the support portions (16) of the securing element (3) are arranged substantially parallel with each other.

12. Spherical joint device according to any one of claims 1 to 11, **characterised in that** the support portions (16) of the securing element (3) can be arranged tangentially relative to a periphery of the ball pin (1).

13. Drive element for driving a flap portion which is movably arranged on a bodywork portion, comprising
a first housing portion which can be connected to the flap portion, and
a second housing portion which can be connected to the bodywork portion,
the first housing portion and the second housing portion being able to be moved relative to each other in a telescope-like manner, **characterised in**
**that** at least on one from the first housing portion or second housing portion an element, ball pin (1) or spherical receiving member (2) of a spherical joint device according to any one of claims 1 to 12 is arranged.

14. Drive element according to claim 13, further comprising a spindle drive device, a spindle being associated with one from the first or second housing portion and a spindle nut being associated with the other from the first or second housing portion.

15. Drive element according to claim 14, **characterised in that** a torque originating from a rotation of the spindle or spindle nut can be introduced into the spherical joint device and can be received by means of an interaction of the shoulder region (6) of the ball pin (1) with the support region of the spherical receiving member (2).

## Revendications

1. Dispositif d'articulation à rotule pour relier de façon articulée un élément d'entraînement à une pièce de volet mobile ou fixe, ledit dispositif comportant
un boulon à rotule (1) pouvant être disposé au niveau d'un parmi l'élément d'entraînement et la pièce de volet et comportant une tête de rotule (4) et une tige de boulon (7),
un logement de rotule (2) pouvant être disposé au niveau de l'autre parmi l'élément d'entraînement et la pièce de volet et comportant une surface de logement (13) dans une région de logement (17) et un côté extérieur (23) opposé à la région de logement (17), et
un élément de blocage (3) conformé en fil et destiné à bloquer la tête de rotule (4) dans la région de logement (17), la tête de rotule (4) pouvant être disposée de façon mobile dans la région de logement (17), et
le boulon à rotule (1) comportant une région d'épaulement (6) reliant la tête de rotule (4) et la tige de boulon (7),
**caractérisé en ce**
**que** l'élément de blocage (3) comporte deux portions d'appui (16) pouvant être disposées dans la région de logement (17),
**que** l'élément de blocage (3) comporte une première portion de retenue (20) et une deuxième portion de retenue (20), la première portion de retenue (20) et la deuxième portion de retenue (20) pouvant être disposées au niveau du côté extérieur (23), opposé à la région de logement, du logement de rotule (2), et
**que** les portions d'appui (16) s'engagent en arrière de la tête de rotule (4) en face de la surface de logement (13) du logement de rotule (2).

2. Dispositif d'articulation à rotule selon la revendication 1, **caractérisé en ce que** le logement de rotule (2) comporte une gorge de retenue (22) qui s'étend parallèlement à l'axe longitudinal de la portion d'appui (16) et sur laquelle porte la portion d'appui (16).

3. Dispositif d'articulation à rotule selon la revendication 1 ou 2, **caractérisé en ce que** le logement de rotule (2) comporte une région d'appui qui entoure la région d'épaulement (6) du boulon à rotule (1) et qui est conformée pour absorber un couple de rotation transféré dans le boulon à rotule (1).

4. Dispositif d'articulation à rotule selon la revendication 3, **caractérisé en ce que** la région d'appui comporte deux surfaces d'appui (18) disposées parallèlement l'une à l'autre.

5. Dispositif d'articulation à rotule selon la revendication 4, **caractérisé en ce qu'**une capacité de pivotement du boulon à rotule (1) dans le logement de rotule (2) causée par une interaction de la région d'épaulement (6) avec les surfaces d'appui (18) peut être limitée à un mouvement dans un plan de pivotement.

6. Dispositif d'articulation à rotule selon l'une des revendications 1 à 5, **caractérisé en ce que** la région d'épaulement (6) du boulon à rotule (1) a au moins un diamètre qui est supérieur ou égal au diamètre de la tête de rotule (4).

7. Dispositif d'articulation à rotule selon l'une des revendications à 1 à 6, **caractérisé en ce que** la région d'épaulement (6) du boulon à rotule (1) et la tête de rotule (4) sont conformées en symétrie de révolution par rapport à un axe de rotation commun.

8. Dispositif d'articulation à rotule selon l'une des revendications 1 à 7, **caractérisé en ce que** l'élément de blocage (3) comporte une troisième portion de retenue (21) qui peut être disposée au niveau du côté extérieur opposé (23) du logement de rotule (2), et **en ce que** la troisième portion de retenue (21) est disposée entre les première et deuxième portions de retenue (20).

9. Dispositif d'articulation à rotule selon l'une des revendications 1 à 8, **caractérisé en ce que** les portions de retenue (20, 21) sont conformées aux extrémités du fil.

10. Dispositif d'articulation à rotule selon l'une des revendications 1 à 9, **caractérisé en ce que** les surfaces latérales du logement de rotule (2) comportent des évidements (15) destinés à loger l'élément de blocage.

11. Dispositif d'articulation à rotule selon l'une des revendications 1 à 10, **caractérisé en ce que** les portions d'appui (16) de l'élément de blocage (3) sont disposées sensiblement parallèlement l'un à l'autre.

12. Dispositif d'articulation à rotule selon l'une des revendications 1 à 11, **caractérisé en ce que** les portions d'appui (16) de l'élément de blocage (3) peuvent être disposées tangentiellement à une périphérie du boulon à rotule (1).

13. Élément d'entraînement destiné à entraîner une pièce de volet disposée de façon mobile au niveau d'une pièce de carrosserie, ledit élément d'entraînement comportant
une première portion de boîtier pouvant être reliée à la pièce de volet, et
une deuxième portion de boîtier pouvant être reliée à la pièce de carrosserie,
la première portion de boîtier et la deuxième portion de boîtier pouvant être télescopiques l'une par rapport à l'autre,
**caractérisé en ce**
**qu'**un élément, boulon à rotule (1) ou logement de rotule (2), d'un dispositif d'articulation à rotule selon l'une des revendications 1 à 12 est disposé au moins au niveau d'une parmi la première portion de boîtier et la deuxième portion de boîtier.

14. Élément d'entraînement selon la revendication 13, comportant en outre un dispositif d'entraînement à broche, une broche étant associée à l'une parmi la première portion de boîtier et la deuxième portion de boîtier et un écrou de broche étant associé à l'autre parmi la première portion de boîtier et la deuxième portion de boîtier.

15. Élément d'entraînement selon la revendication 14, **caractérisé en ce qu'**un couple de rotation causé par une rotation de la broche ou de l'écrou de broche peut être transféré dans le dispositif d'articulation à rotule et peut être absorbé par une interaction de la région d'épaulement (6) du boulon à rotule (1) avec la région d'appui du logement de rotule (2).
